# EUROPÄISCHE PATENTSCHRIFT

(11) **EP 0 562 292 B1**
(45) Veröffentlichungstag und Bekanntmachung des Hinweises auf die Patenterteilung: **03.05.2000**
(21) Anmeldenummer: 93102823.7
(22) Anmeldetag: 24.02.1993
(51) Int. Cl.: G06K 19/077, G06K 7/00

(54) **Fernübertragung kontaktfreie Chipkarte**
Remote transmission contactless chip card
Carte à puce sans contact avec transmission à distance

(30) Priorität: 26.02.1992 DE 4205827
(43) Veröffentlichungstag der Anmeldung: 29.09.1993
(73) Patentinhaber: Angewandte Digital Elektronik GmbH, 21521 Dassendorf (DE)
(72) Erfinder: Kreft, Hans-Diedrich, 21521 Dassendorf (DE)
(74) Vertreter: Mierswa, Klaus, Dipl.-Ing.

(56) Entgegenhaltungen:
- EP-A- 0 408 456
- EP-A- 0 466 949
- WO-A-89/01722
- DE-A- 3 447 560
- DE-C- 3 935 364
- GB-A- 2 243 235
- US-A- 4 354 189
- US-A- 4 794 236
- US-A- 4 855 583
- US-A- 4 972 099

## Beschreibung

Die Erfindung betrifft eine Chipkarte gemäß dem Oberbegriff des Anspruchs 1.

Im Einsatz befindliche Plastikkarten, welche elektronisch ablesbar sind, arbeiten vorzugsweise nach zwei Verfahren. Am weitesten verbreitet sind Karten mit Magnetstreifen, welche keinen Chip zur Speicherung und Bearbeitung von Information enthalten. Zunehmend werden Karten eingesetzt, welche einen Chip enthalten, in dem Informationen sicher gespeichert und elektronisch verändert werden können. Diese Karten werden Chipkarten oder smart cards genannt. Die Versorgung der auf der Karte erforderlichen Chips mit Strom und Spannung geschieht über Kontakte oder kontaktfrei nach einem Verfahren, wie es in der DE 34 47 560 C2 dargelegt ist. Derartige Chipkartensysteme arbeiten kontaktfrei, indem Energie- und Datenübertragung induktiv erfolgen.

Die unter Verwendung der DE 34 47 560 C2 am Markt befindlichen Verfahren benötigen eine sehr enge räumliche Kopplung von weniger als 5 mm Abstand zwischen den Spulen auf der Chipkarte und den Spulen im Schreib-/Lesesystem. Diese enge Kopplung ist in vielen Fällen erwünscht, um Abfragen der Daten einer Karte über Distanz durch Unbefugte auszuschließen.

Es sind aber auch Anwendungen erwünscht, in denen die Karte ihre Informationen über eine größere Distanz abgeben soll. Insbesondere ist dies bei reinen Identifikationen der Fall, wenn es nur auf die Erfassung einer charakteristischen Kartennummer ankommt, wie es bei Zugangskontrollen erforderlich ist.

Durch die EP 0 557 934 A2 ist vorgeschlagen worden, in einer Chipkarte mit elektronischen Elementen wie Spulen zur kontaktfreien Übertragung von Daten einen externen Sicherheitsschalter vorzusehen, der es gestattet, die Elektronik oder Teile der Elektronik per manueller Bedienung ein- oder auszuschalten.

Durch die DE-3935363-C1 ist eine Chipkarte (Plastikkarte, Smartcard etc.) bekannt geworden, bei der über eine elektronische Schaltung ein Chip wahlweise mit einem Kontaktfeld gemäß ISO-Norm 7816 oder an eine kontaktfreie Spulenübertragungsstrecke angeschlossen wird, so daß die Funktionsweise der auf der Karte befindlichen datenverarbeitenden Chips in vollkommen gleicher Weise geschieht, unabhängig davon, ob die kontaktbehaftete oder die kontaktfreie Funktionsweise der Karte gewählt wird.

Durch die US 4,972,099 ist eine Sensorkarte gemäß dem Oberbegriff des Anspruchs 1 bekannt geworden, welche einen Mikroprozessor mit Speichern und Verbindungen sowie einen Druck- und Temperatursensor enthält, deren elektrische Ausgangssignale über einen Multiplexer vom Mikroprozessor abgefragt und gespeichert werden können. Diese Daten können neben einer kontaktbehafteten Abfrage auch in kontaktloser Weise magnetisch abgefragt werden.

Durch die EP 0 408 456 A1 ist des Weiteren eine gegen Aufschaltungen geschützte Chipkarte bekannt geworden, die wenigstens einen Belastungsaufnehmer enthält, der durch eine Schutzschicht geschützt ist und der sich solange in Ruhe befindet, solange die Schutzschicht nicht beeinträchtigt ist. Bei einer Aufschaltung bzw. Beeinträchtigung der Schutzschicht gibt der Belastungsaufnehmer ein Signal ab, welches mittels eines Schaltkreis festgestellt wird.

Der Erfindung liegt die Aufgabe zugrunde, eine Chipkarte der eingangs genannten Gattung zu schaffen, die Informationen aus der Kartenumwelt aufzunehmen und wahlweise auch abzugeben imstande sein soll und wahlweise eine Nah- oder Fernübertragung von Daten ermöglicht.

Die Lösung der Aufgabe erfindungsgemäß darin, daß eine der spulen (2) zur kontaktfreien Nahübertragung von Energie und Daten dient, sowie elektronische Bauteile (4) zum Aufbau eines elektromagnetischen Schwingkreises zum Fernübertragen und Empfangen von Daten vorhanden sind, dass die vom Sensor (6) erhaltenen Informationen zur Änderung der Funktion der Chipkarte (1) nutzbar sind, wobei zum Herstellen von Verbindungen zwischen den einzelnen Bauteilen zum Aufbau des elektromagnetischen Schwingkreises (4) mittels des Sensors (6) und/oder von außen mittels des Schalters (5) in die Funktion der Chipkarte eingreifbar ist.

Der Vorteil der Chipkarte besteht darin, daß durch die erfindungsgemäße Ausgestaltung der Chipkarte zusätzliche Informationen aus der Kartenumwelt verarbeitet werden können.

### Erläuterung zu Grafik 1:

In Grafik 1 ist symbolisch eine Chipkarte mit den unterschiedlichen in den Ansprüchen aufgeführten Bauteilen dargestellt, welche üblicherweise unsichtbar in den Kartenkörper 1 eingebettet sind. Bauteil 2 enthält die elektronischen Elemente, wie sie üblicherweise zur Funktion einer Karte gemäß der DE 34 47 560 C2 erforderlich sind. Im Wesentlichen handelt es sich um zwei Spulen zur bidirektionalen Datenübertragung, welche gleichzeitig zum Empfang von Energie nach dem Transformatorprinzip dienen. Bauteil 3 ist als Batterie, Akkumulator, Kondensator, allgemein als Speicher für elektrische Ladung, ausgeführt. Bauteil 4 enthält die Elemente eines elektronischen Schwingkreises wie Spulen, Kondensatoren. Der Schalter 5 gestattet es, von außen in die Funktion der Chipkarte einzugreifen und Verbindungen zwischen den einzelnen Bauteilen per Bedienung durch den Benutzer der Chipkarte herzustellen. Bauteil 6 ist als Sensor für verschiedenste Signale ausgestaltet, welche eine Chipkarte ausgesetzt wird. Bauteil 7 ist als Signalgeber ausgestaltet.

Wenn eine Fernübertragung von Informationen erwünscht ist, müssen zusätzlich Bauteile auf einer Karte gemäß DE-3447560-C2 enthalten sein. Mit dem von außen, d. h. vom Benutzer der Chipkarte, zugänglichen Schalter 5 kann der Speicher 3 an die Bauteile des Schwingkreises 4 zu dessen Aktivierung angeschlossen werden. Damit kann eine derart ausgestattete Chipkarte Daten fernübertragen. Da die Fernübertragung von Daten der Chipkarte nur in besonderen Fällen gewünscht ist, bestimmt der Nutzer per Schalter 5 über diese Funktion. Eine derart ausgestattete Karte ermöglicht es beispielsweise, die Zugangkontrolle einer Person per Distanz zu ermöglichen. Der Kartennutzer muß die Karte nicht mehr in einen Schlitz stecken. Stattdessen wird die Fernübertragung im Bereich der Zugangskontrolle vom Kartennutzer aktiviert und der Code der Karte wird an den Empfänger übertragen. Anschließend kann die Fernübertragung per Schalter 5 deaktiviert werden.

Gemäß der DE-34 47 560-C2 werden zwei Spulen in Bauteil 2 genutzt. Diese Spulen lassen sich ebenfalls als Antennenspulen für die Fernübertragung nutzen. Hierzu schaltet der Schalter 5 Elemente des Bauteils 4, beispielsweise Kondensatoren, als Schwingkreiselemente in Reihe oder in Serie mit den Spulen in Bauteil 2. Durch diese Schaltung erhalten die Spulen von Bauteil 2 eine Doppelfunktion, da sie sowohl zur Nah-, wie auch zur Fernübertragung genutzt werden. Die Anzahl der Elemente des Bauteils 4 vermindert sich um die Antennenspulen, was wegen des begrenzten Platzes auf der Karte 1 zweckmäßig ist und die Herstellkosten herabsetzt.

Wird die Karte gemäß der DE-34 47 560-C2 genutzt, sendet die Karte neben den gewünschten Frequenzen weitere Frequenzen als Oberwellen mit geringerem Energieinhalt aus. Ein Empfänger könnte bei Empfang dieser Oberwellenfrequenzen von einer per Schalter 5 aktivierten Fernübertragung der Elemente 2,4 ausgehen und versuchen, Informationen aus der Schwingung zu gewinnen. Sind die Frequenzen der Fernübertragung wesentlich in ihren Werten von den Oberwellen der Frequenzen der Nahübertragung unterschieden, kann diese Verwechslung nicht auftreten. Ein Empfänger kann bei Empfang der Fernübertragungsfrequenz von aktivierter Fernübertragung ausgehen.

Die Elektronik in Bauteil 2 enthält üblicherweise einen Mikroprozessor mit Speicher. Werden in den Speicher spezifische Informationen gemäß Nutzung der DE-34 47 560-C2 eingeschrieben, kann die Funktion des Schalters 5 von diesen Speicherinhalten abhängig sein. So kann beispielsweise der Schalter deaktiviert werden oder erst aktiviert werden, wenn eine spezifische Kennung (PIN Code) gemäß DE-34 47 560-C2 eingegeben wird. Der Schalter kann beispielsweise auch innerhalb einer Zeitspanne gesperrt werden. In Abhängigkeit von der Information im Speicher von Bauteil 2 kann auch die fernübertragene Information zusammengesetzt sein.

Bei zukünftigen Karten werden zusätzliche Informationen aus der Kartenumwelt verarbeitet werden. Beispielsweise ist es bei weiterer Miniaturisierung von elektronischen und mechanischen Komponenten (Siliziummechanik) möglich, solche Sensoren in der Karte unterzubringen, welche als Kartenverwendungsschreiber gelten können. Temperatur-, Beschleunigungs-, Schallsensoren können gemeinsam mit der abgelegten Zeit einen Ablauf der Nutzung der Karte geben. Es ist aber auch möglich das Schallbild der Stimme des Kartenträgers für Verschlüsselungszwecke zu verwenden. Zur Aufnahme von Informationen können die unterschiedlichen Sensoren auf der Karte dienen. Unabhängig von der Funktion als Sensor kann Bauteil 7 auch als Sender zusätzlich oder unabhängig von der Sensorfunktion ausgestaltet sein. So ist es denkbar, Informationen auch über eine Infrarotdiode oder eine Schallquelle auszusenden. Die empfangenen Informationen können vom Prozessor des Bauteils 2 verwendet werden, um Funktionen in Abhängigkeit von den Sensorwerten zu steuern. Das Öffnen bestimmter Funktionen kann beispielsweise von dem empfangenen Schallbild abhängig sein. Der Prozessor kann selbsttätig bei Überschreiten einer voreingestellten Temperatur auf der Karte eine Transistorstrecke durchbrennen, so dass bei späterer Analyse nachweisbar ist, dass die Karte einer hohen Temperatur ausgesetzt wurde.

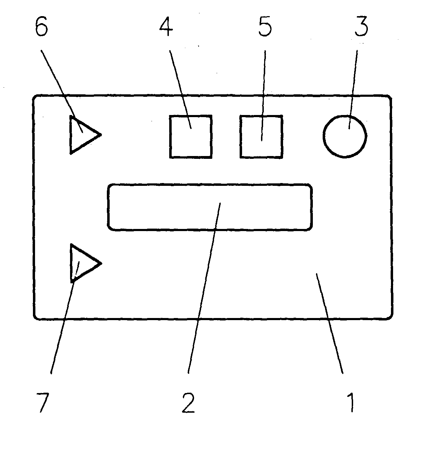

## Patentansprüche

1. Chipkarte (1) mit einem Mikroprozessor, welcher einen Speicher aufweist, und wenigstens einer Spule (2) zum kontaktfreien, bidirektionalen Ubertragen von Energie und Daten mit einem Schreib/Lesegerät mittels elektromagnetischer Wechselfelder und mittels weiteren elektronischen Bauteilen der Chipkarte (1), sowie einem manuell betätigbaren Schalter (5) zum Ein- und Ausschalten von elektronischen Teilen (2,3,4,6) der Chipkarte (1), und wenigstens einem Sensor (6) zur Aufnahme physikalischer, chemischer oder biologischer Informationen aus der Kartenumwelt, der mit den anderen Bauteilen der Chipkarte (1) derart verknüpft ist, dass die vom Sensor (6) erhaltenen Informationen im Speicher ablegbar sind,
dadurch gekennzeichnet,
daß eine der Spulen (2) zur kontaktfreien Nahübertragung von Energie und Daten dient, sowie elektronische Bauteile (4) zum Aufbau eines elektromagnetischen Schwingkreises zum Fernübertragen und Empfangen von Daten vorhanden sind, dass die vom Sensor (6) erhaltenen Informationen zur Änderung der Funktion der Chipkarte (1) nutzbar sind, wobei zum Herstellen von Verbindungen zwischen den einzelnen Bauteilen zum Aufbau des elektromagnetischen Schwingkreises (4) mittels des Sensors (6) und/oder von außen mittels des Schalters (5) in die Funktion der Chipkarte eingreifbar ist.

2. Chipkarte nach Anspruch 1, dadurch gekennzeichnet,
dass der Schalter (5) einen Speicher (3) für elektrische Ladung mit den Elementen des elektromagnetischen Schwingkreises (4) zur Übertragung elektromagnetischer Schwingungen mit aufmodulierten Informationen zur Datenfernübertragung verbindet.

3. Chipkarte nach Anspruch 1 oder 2, dadurch gekennzeichnet,
dass wenigstens eine der Spulen (2) mittels des Schalters (5) als Antennenspule des elektromagnetischen Schwingkreises (4) für die elektromagnetische Datenfernübertragung dient.

4. Chipkarte nach Anspruch 1, dadurch gekennzeichnet,
dass die Frequenz des elektromagnetischen Schwingkreises für die elektromagnetische Fernübertragung von der Übertragungsfrequenz der Spule für die Nahübertragung sowie den Werten der Oberwellen der Frequenzen der Nahübertragung unterschiedlich ist, so dass für einen Empfänger bei Empfang der Fernübertragungsfrequenz von aktivierter Fernübertragung auszugehen ist.

5. Chipkarte nach Anspruch 1, dadurch gekennzeichnet,
dass der Sensor (6) ein solcher zur Aufnahme von Temperatur, Beschleunigung oder Schall ist.

6. Chipkarte nach Anspruch 1, dadurch gekennzeichnet,
dass auf der Chipkarte als weiteres Bauteil ein Signalgeber (7) oder ein Sender (7) zur Aussendung physikalischer, chemischer oder biologischer Informationen angeordnet ist.

7. Chipkarte nach Anspruch 6, dadurch gekennzeichnet,
dass der Sender (7) eine Infrarotdiode oder eine Schallquelle ist.

8. Chipkarte nach Anspruch 1 oder 2, dadurch gekennzeichnet,
dass als Temperatursensor (6) eine Transistorstrecke vorhanden ist, die bei einer vorgegebenen Temperatur mittels eines vom Prozessor der Chipkarte (1) herrührenden Signals durchbrennt.

9. Chipkarte nach Anspruch 1, dadurch gekennzeichnet,
dass neben den Informationen aus der Kartenumwelt auch die Zeit ablegbar ist zum Aufzeichnen der Nutzung der Chipkarte als Kartenverwendungsschreiber.

## Claims

1. Chip card (1) with a microprocessor having a memory and at least one coil (2) for contact-free, bidirectional transmission of energy and data with a read/write device by means of electromagnetic alternating fields and by means of additional electronic components of the chip card (1), as well as a manually operable switch (5) for switching electronic parts (2, 3, 4, 6) of the chip card (1) on and off, and at least one sensor (6) for receiving physical, chemical or biological information from the card environment that is linked to the other components of the chip card (1) in such a way that the information received by the sensor (6) can be stored in the memory,
characterized in that
one of the coils (2) serves for contact-free, close-range transmission of energy and data, and there are electronic components (4) for building up an electromagnetic oscillating circuit for long-range transmission and receiving of data, in that the information received from the sensor (6) can be used to change the function of the chip card (1), whereby, in order to establish connections between the individual components for purposes of building up the electromagnetic oscillating circuit (4), it is possible to intervene in the function of the chip card by means of the sensor (6) and/or externally by means of the switch (5).

2. Chip card according to Claim 1, characterized in that
the switch (5) connects a memory (3) for electric charging with the elements of the electromagnetic oscillating circuit (4) in order to transmit electromagnetic oscillations with modulated information for long-range data transmission.

3. Chip card according to Claim 1 or 2, characterized in that
at least one of the coils (2), via the switch (5), serves as an antenna coil of the electromagnetic oscillating circuit (4) for the electromagnetic long-range data transmission.

4. Chip card according to Claim 1, characterized in that
the frequency of the electromagnetic oscillating circuit for the electromagnetic long-range transmission differs from the transmission frequency of the coil for the close-range transmission as well as from the values of the harmonic waves of the frequencies of the close-range transmission, so that, when a receiver receives the long-range transmission frequency, activated long-range transmission can be assumed.

5. Chip card according to Claim 1, characterized in that
the sensor (6) is one that can detect temperature, acceleration or sound.

6. Chip card 1, characterized in that,
as another component, there is a signal generator (7) or a transmitter (7) situated on the chip card for emitting physical, chemical or biological information.

7. Chip card according to Claim 6, characterized in that
the transmitter (7) is an infrared diode or a sound source.

8. Chip card according to Claim 1 or 2, characterized in that,
as the temperature sensor (6), there is a transistor path that burns out at a predefined temperature by means of a signal stemming from the processor of the chip card (1).

9. Chip card according to Claim 1, characterized in that,
in addition to the information from the card environment, the time can also be stored in order to record the use of the chip card, as a card use recorder.

## Revendications

1. Carte à puce (1) avec un microprocesseur à mémoire et avec au moins une bobine (2) servant à la transmission bidirectionnelle et sans contact d'énergie et de données avec un dispositif de lecture/écriture au moyen de champs électromagnétiques alternatifs et à l'aide d'autres composants électroniques de la carte à puce (1), ainsi qu'avec un interrupteur (5) pouvant être actionné à la main pour la mise en circuit et hors circuit des composants électroniques (2,3,4,6) de la carte à puce (1) et avec au moins un capteur (6) qui relève des informations physiques, chimiques ou biologiques provenant de l'environne-ment ambiant de la carte et qui est connecté aux autres composants de la carte à puce (1) de sorte que les informations collectées par le capteur peuvent être stockées dans la mémoire, caractérisée en ce que
l'une des bobines (2) sert à la transmission sur courte distance et sans contact d'énergie et de données et qu'il existe des composants électroniques (4) servant à l'établissement d'un circuit oscillant électromagnétique destiné à transmettre à distance et à recevoir des données, que les informations provenant du capteur (6) peuvent être utilisées pour changer la fonction de la carte à puce (1), en intervenant sur la fonction de la carte à puce à l'aide du capteur (6) et/ou de l'extérieur à l'aide de l'interrupteur (5) pour établir des connexions entre les composants individuels afin d'établir le circuit oscillant électromagnétique (4).

2. Carte à puce selon la revendication 1, caractérisée en ce
que l'interrupteur (5) connecte une mémoire (3) pour charge électrique aux composants du circuit oscillant électromagnétique (4) pour la transmission d'oscillations électromagnétiques sur lesquelles sont modulées des informations pour la télétransmission électromagnétique de données.

3. Carte à puce selon l'une quelconque des revendications 1 ou 2, caractérisée en ce
qu'au moins l'une des bobines (2) sert, par l'intermédiaire de l'interrupteur (5), de bobine d'antenne du circuit oscillant électromagnétique (4) pour la télétransmission électromagnétique de données.

4. Carte à puce selon la revendication 1, caractérisée en ce
que la fréquence du circuit oscillant électromagnétique pour la transmission électromagnétique à distance se distingue de la fréquence de transmission de la bobine pour la transmission à courte distance et des valeurs des harmoniques des fréquences de la transmission à courte distance, de sorte qu'un récepteur, lorsqu'il reçoit la fréquence de transmission à distance, peut conclure à ce que la transmission à distance est activée.

5. Carte à puce selon la revendication 1, caractérisée en ce
que le capteur (6) est de nature à capter la température, l'accélération ou le son.

6. Carte à puce selon la revendication 1, caractérisée en ce
qu'un transmetteur de signaux (7) ou un émetteur (7) garnit la carte à puce en tant que composant supplémentaire émettant des informations d'ordre physique, chimique ou biologique.

7. Carte à puce selon la revendication 6, caractérisée en ce
que l'émetteur (7) est une diode à infrarouge ou une source sonore.

8. Carte à puce selon l'une quelconque des revendications 1 ou 2, caractérisée en ce
qu'elle comprend comme capteur de température (6) une section de ligne transistorisée qui saute à une température prédéterminée suite à un signal provenant du processeur de la carte à puce (1).

9. Carte à puce selon la revendication 1, caractérisée en ce
que, outre les informations provenant de l'environnement ambiant de la carte, le temps, lui aussi, peut être mémorisé pour l'enregistrement de l'usage de la carte à puce en tant qu'enregistreur de l'utilisation qui a été faite.
